# EUROPÄISCHE PATENTSCHRIFT

(11) **EP 3 008 122 B1**
(45) Veröffentlichungstag und Bekanntmachung des Hinweises auf die Patenterteilung: **09.08.2017**
(21) Anmeldenummer: 14729348.4
(22) Anmeldetag: 11.06.2014
(51) Int. Cl.: C08J 9/16, C08J 9/34, C08J 9/12, B29C 44/34, B29B 9/06, B29B 9/12

(54) **VERFAHREN ZUR HERSTELLUNG VON EXPANDIERTEM GRANULAT**
METHOD FOR THE PRODUCTION OF EXPANDED GRANULES
PROCÉDÉ POUR LA FABRICATION DE GRANULÉS EXPANSÉS

(30) Priorität: 13.06.2013 EP 13171855
(43) Veröffentlichungstag der Anmeldung: 20.04.2016
(73) Patentinhaber: BASF SE, 67056 Ludwigshafen am Rhein (DE)
(72) Erfinder: DAESCHLEIN, Christian, 68199 Mannheim (DE); GUTMANN, Peter, 76199 Karlsruhe (DE); PRISSOK, Frank, 49448 Lemförde (DE); KEPPELER, Uwe, 67126 Hochdorf-Assenheim (DE); AHLERS, Juergen, 68649 Groß-Rohrheim (DE)
(86) Internationale Anmeldenummer: PCT/EP2014/062144
(87) Internationale Veröffentlichungsnummer: WO 2014/198779

(56) Entgegenhaltungen:
- WO-A1-2007/082838
- WO-A1-2013/153190

## Beschreibung

Die Erfindung betrifft ein Verfahren zur Herstellung von expandiertem Granulat aus einem thermoplastischen Elastomer mit einer Bruchdehnung von mehr als 100% gemessen nach DIN EN ISO 527-2. Expandiertes Granulat aus thermoplastischen Elastomeren mit einer Bruchdehnung von mehr als 100% gemessen nach DIN EN ISO 527-2 kann aufgrund der elastischen und tribologischen Eigenschaften in unterschiedlichsten Anwendungen eingesetzt werden. Entsprechende expandierte Granulate können beispielsweise für wiederverwendbare Gymnastikmatten, Körperprotektoren, Auskleidungselemente im Automobilbau, Schall- und Schwingungsdämpfer, Verpackungen oder in Schuhsohlen verwendet werden. In allen diesen Bereichen sind eine hohe Elastizität und eine gute Homogenität der Partikel des Granulats von entscheidender Bedeutung.

Schaumstoffe, insbesondere auch Partikelschaumstoffe, sind seit langem bekannt und in der Literatur vielfach beschrieben, zum Beispiel in Ullmanns "Enzyklopädie der technischen Chemie", 4. Auflage, Band 20, Seite 416 ff.

Aus der WO 2007/082838 ist ein Verfahren zur Herstellung von expandiertem, treibmittelhaltigen thermoplastischen Polyurethan bekannt. Darin wird in einem ersten Schritt ein thermoplastisches Polyurethan zu einem Granulat extrudiert. In einem zweiten Schritt wird das Granulat in wässriger Suspension unter Druck mit einem Treibmittel imprägniert und in einem dritten Schritt expandiert. In einer weiteren Ausführungsform des Verfahrens wird das thermoplastische Polyurethan zusammen mit einem Treibmittel in einem Extruder aufgeschmolzen und die Schmelze ohne eine Vorrichtung, die ein Aufschäumen verhindert, granuliert. Bei der Herstellung mit Extrusionsverfahren werden als Treibmittel flüchtige organische Verbindungen verwendet.

Die EP-A 0 664 197 offenbart die Herstellung expandierter thermoplastischer Elastomere, wobei zur Vermeidung von organischen Treibmitteln Wasser als Treibmittel eingesetzt wird. Ein alternatives Verfahren zur Herstellung von Schäumen aus thermoplastischen Elastomeren unter Verwendung von Kohlendioxid und Stickstoff als Treibmittel ist zum Bespiel aus WO 2004/018551 bekannt. Ein weiteres Verfahren zur Herstellung expandierter thermoplastischer Elastomere, das auf das in der WO 2004/018551 beschriebene Verfahren zur Schaumherstellung zurückgreift, ist auch in der WO 2007/044123 offenbart.

Keines der aus dem Stand der Technik bekannten Dokumente offenbart jedoch, dass es auch möglich ist, mit dem beschriebenen Verfahren expandierte Granulate mit einer geschlossenen Haut herzustellen.

Die Verwendung eines Extrusionsverfahrens zur Herstellung expandierter Granulate aus TPU ermöglicht eine kontinuierliche Herstellung und damit eine schnelle Verarbeitung unterschiedlichster Härtegrade sowie den schnellen Wechsel weiterer Eigenschaften, wie beispielsweise der Farbe der produzierten expandierten Partikel.

Bei der direkten Herstellung von expandierten Granulaten mittels Extrusion stellt sich jedoch das Problem ein, dass beim Aufschäumen der Partikel keine geschlossene Haut entsteht, und die expandierten Partikel in sich zusammenfallen, so dass Partikel mit geringer Schüttdichte nicht hergestellt werden können. Ebenfalls nachteilig ist, dass die eingesetzten Treibmittel brennbar sind und aufgrund einer vorhandenen Explosionsgefahr schwierig zu verarbeiten sind. Des Weiteren müssen die hergestellten expandierten Granulate vor der Auslieferung gelagert werden, bis sich das eingesetzte brennbare Treibmittel verflüchtigt hat.

Eine Aufgabe der vorliegenden Erfindung ist es, ein Verfahren zur Herstellung von expandiertem Granulat aus einem thermoplastischen Elastomer mit einer Bruchdehnung von mehr als 100% gemessen nach DIN EN ISO 527-2 bereitzustellen, bei dem expandierte Granulatkörner mit einer geschlossenen Haut entstehen, das die aus dem Stand der Technik bekannten Nachteile nicht aufweist. Die mit dem Verfahren hergestellten Granulate sollen eine homogene Form, homogene Zellstruktur und möglichst geringe Schüttdichten aufweisen. Hierbei soll durch das verwendete Verfahren eine große Breite an verschiedenen Dichten möglich sein. Zudem soll auf den Einsatz organischer Treibmittel verzichtet werden.

Gelöst wird die Aufgabe durch ein Verfahren zur Herstellung von expandiertem Granulat aus einem thermoplastischen Elastomer mit einer Bruchdehnung von mehr als 100% gemessen nach DIN EN ISO 527-2, umfassend die Schritte:
(a) Pressen einer treibmittelhaltigen Polymerschmelze durch eine auf eine Temperatur zwischen 150°C und 280 °C temperierte Lochplatte in eine Granulierkammer,
(b) Zerkleinern der durch die temperierte Lochplatte gepressten Polymerschmelze mit einer Schneidevorrichtung in einzelne expandierende Granulatkörner,
(c) Austragen der Granulatkörner aus der Granulierkammer mit einem Flüssigkeitsstrom,
wobei das Treibmittel CO₂ oder N₂ oder eine Kombination aus CO₂ und N₂ enthält und die Menge an Treibmittel in der treibmittelhaltigen Polymerschmelze im Bereich von 0,5 bis 2,5 Gew.-% liegt und wobei die Granulierkammer von einer auf eine Temperatur zwischen 5 °C und 90 °C temperierten Flüssigkeit durchströmt wird, deren Druck 0,1 bar bis 20 bar oberhalb des Umgebungsdrucks liegt und wobei Druck und Temperatur der Flüssigkeit in der Granulierkammer sowie die Temperatur der Lochplatte so gewählt werden, dass die Granulatkörner in der unter Druck stehenden Flüssigkeit durch das enthaltene Treibmittel so expandiert werden, dass expandierte Granulatkörner mit einer geschlossenen Haut entstehen, und wobei die Polymerschmelze ein thermoplastisches Elastomer auf Basis von Polyetheramiden, Polyetherestern, Polyesterestern oder Styrol-Butadien-Blockcopolymeren enthält. Überraschenderweise hat sich gezeigt, dass die niedrigsten Schüttdichten nicht wie erwartet bei möglichst hohen Treibmittelmengen erhalten werden, sondern dass eine Treibmittelmenge von maximal 2,5 Gew.-%, bevorzugt von maximal 2 Gew.-% und insbesondere von maximal 1,5 Gew.-% zu einer besonders geringen Schüttdichte führen. Bei einer Treibmittelmenge von weniger als 0,5 Gew.-% steigt die Schüttdichte ebenfalls wieder an. Die jeweiligen Massenanteile sind dabei auf die Gesamtmasse der Polymerschmelze mit darin enthaltenem Treibmittel bezogen.

Die optimal einzusetzende Treibmittelmenge hängt ab vom eingesetzten thermoplastischen Elastomer und der Zusammensetzung des Treibmittels, liegt jedoch immer im Bereich zwischen 0,5 und 2.5 Gew.-%.

Im Schritt (a) des Verfahrens wird eine mit einem Treibmittel und gegebenenfalls weiteren Zusatzstoffen vermischte Polymerschmelze durch die Lochplatte gedrückt. Die Herstellung der Treibmittel und gegebenenfalls weitere Zusatzstoffe enthaltenden Polymerschmelze erfolgt im Allgemeinen mit Hilfe eines Extruders und/oder einer Schmelzepumpe. Diese Apparate werden auch genutzt, um den notwendigen Druck zu erzeugen, mit dem die Polymerschmelze durch die Lochplatte gepresst wird. Bei Verwendung eines Extruders, beispielsweise eines Doppelschneckenextruders, wird zunächst das Polymer plastifiziert und gegebenenfalls mit Hilfsstoffen vermischt. Während des Mischens wird das im Extruder enthaltene Material in Richtung der temperierten Lochplatte transportiert. Falls das Treibmittel nicht bereits am Anfang mit dem Polymer in den Extruder eingegeben wurde, kann dieses dem Material nach Durchlaufen einer Teilstrecke im Extruder zugegeben werden. Das Treibmittel und das Polymer werden beim Durchlaufen der restlichen Extruderstrecke vermischt. Dabei wird die Schmelze auf die für die anschließende Granulierung erforderliche Temperatur gebracht. Der für das Pressen der Schmelze durch die Lochplatte erforderliche Druck kann beispielsweise mit einer Schmelzpumpe aufgebracht werden. Alternativ wird der erforderliche Druck durch die entsprechende Geometrie des Extruders und insbesondere der Extruderschnecke erzeugt. Der für die Granulierung erforderliche Druck und die notwendige Temperatur der Schmelze sind abhängig von dem verwendeten Polymer sowie der verwendeten Hilfsstoffe und des verwendeten Treibmittels und sind des Weiteren abhängig von dem Mischungsverhältnis der Komponenten zueinander. Durch die temperierte Lochplatte gelangt die Polymerschmelze in die Granulierkammer. Durch die Granulierkammer strömt eine temperierte Flüssigkeit, deren Druck 0,1 bar bis 20 bar oberhalb des Umgebungsdrucks liegt. Bevorzugt liegt der Druck der Flüssigkeit, die durch die Granulierkammer strömt, 0,1 bis 5 bar oberhalb des Umgebungsdrucks.

In der Granulierkammer wird das durch die temperierte Lochplatte gedrückte Polymer zu Strängen geformt, die mit einer Schneidevorrichtung in einzelne expandierende Granulatkörner zerkleinert werden. Die Schneidevorrichtung kann beispielsweise als schnell rotierendes Messer ausgeführt sein. Die Form der entstehenden Granulatkörner ist zum einen abhängig von der Form und Größe der Öffnungen in der Lochplatte, zum anderen ist die Form abhängig von dem Druck, mit dem die Schmelze durch die Löcher der Lochplatte gedrückt wird und der Geschwindigkeit der Schneidevorrichtung. Bevorzugt werden der Einpressdruck, die Geschwindigkeit der Schneidevorrichtung und die Größe der Öffnungen in der Lochplatte so gewählt, dass die Form der Granulatkörner im Wesentlichen sphärisch oder elliptisch ist.

Im letzten Schritt des Verfahrens werden die Granulatkörner mit Hilfe der durch die Granulierkammer strömenden temperierten Flüssigkeit aus der Granulierkammer ausgetragen. Der Druck und die Temperatur der temperierten Flüssigkeit sind dabei so gewählt, dass die Polymerstränge/Granulatkörner durch das enthaltende Treibmittel kontrolliert expandiert werden und eine geschlossene Haut an der Oberfläche der Granulatkörner erzeugt wird.

Zusammen mit der temperierten Flüssigkeit strömt das Granulat in einen Trockner, wo es von der Flüssigkeit getrennt wird. Das fertige expandierte Granulat wird in einem Behälter aufgefangen, während die Flüssigkeit gefiltert wird und über eine Druckpumpe wieder in die Granulierkammer geleitet wird.

Durch die Granulierung in einer unter Druck stehenden Flüssigkeit mit kontrollierter Flüssigkeitstemperatur wird vermieden, dass die treibmittelhaltige Polymerschmelze unkontrolliert expandiert, ohne dass sich eine geschlossene Haut ausbilden kann. Solche Partikel würden zwar anfangs eine geringe Schüttdichte aufweisen, jedoch schnell wieder in sich zusammen fallen. Das Ergebnis wären inhomogene Partikel von hoher Schüttdichte und geringerer Elastizität. Durch das erfindungsgemäße Verfahren wird die Expansion der Granulatkörner kontrolliert verlangsamt, so dass strukturierte Körner entstehen, welche eine geschlossene Haut besitzen und in ihrem Inneren eine zellige Struktur aufweisen, wobei die Zellengröße an der Oberfläche gering ist und in Richtung Zentrum zunimmt. Die Größe der Zellen im Zentrum ist vorzugsweise kleiner als 250 µm. Die Schüttdichte des expandierten Granulats liegt vorzugsweise bei maximal 250 g/l. Die maximale Ausdehnung der einzelnen expandierten Granulatkörner liegt vorzugsweise im Bereich von 2 bis 15 mm, insbesondere im Bereich von 5 bis 12 mm, wobei die Masse eines einzelnen Granulatkorns zwischen 2 und 40 mg, insbesondere zwischen 5 und 35 mg, liegt.

Die Expansion des Granulats wird durch Einstellen von Druck und Temperatur der temperierten Flüssigkeit in der Granulierkammer, sowie durch Einstellen der Temperatur der Lochplatte kontrolliert. Expandieren die Granulatkörner zu schnell beziehungsweise unkontrolliert, so dass sich keine geschlossene Haut bildet, wird der Druck der Flüssigkeit in der Granulierkammer erhöht und/oder die Temperatur der temperierten Flüssigkeit in der Granulierkammer abgesenkt. Der vergrößerte Druck der die Granulatkörner umgebenden temperierten Flüssigkeit wirkt der Expansionswirkung des Treibmittels entgegen und bremst die Expansion des Granulats. Die Verringerung der Temperatur der temperierten Flüssigkeit in der Granulierkammer bewirkt eine dickere Haut der Partikel und bietet der Expansion somit mehr Widerstand. Bei einem im Verhältnis zum verwendeten Treibmittel zu hohen Flüssigkeitsdruck oder einer zu niedrigen Temperatur der temperierten Flüssigkeit, kann ein Expandieren der Granulatkörner zu stark behindert oder gar vollständig unterbunden werden, so dass Granulat mit zu großer Schüttdichte entsteht. In diesem Fall wird der Druck der temperierten Flüssigkeit in der Granulierkammer abgesenkt und/oder die Temperatur der temperierten Flüssigkeit angehoben.

Zusätzlich oder alternativ zur Anpassung des Drucks und/oder der Temperatur der temperierten Flüssigkeit in der Granulierkammer kann die Expansion der Granulatkörner auch über die Temperatur der temperierten Lochplatte beeinflusst werden. Durch Absenken der Temperatur der temperierten Lochplatte kann Wärme aus der Polymerschmelze schneller an die Umgebung abgegeben werden. Dadurch wird die Bildung einer geschlossenen Haut, die Voraussetzung für ein stabiles, geschäumtes Granulatkorn ist, gefördert. Wird die Temperatur der temperierten Lochplatte und/oder der Flüssigkeit in der Granulierkammer zu niedrig gewählt, kühlt die Polymerschmelze zu schnell aus und verfestigt sich, bevor eine ausreichende Expansion einsetzen kann. Die Expansion des Granulatkorns durch das enthaltende Treibmittel wird so erschwert, dass Granulat mit einer zu hohen Schüttdichte entsteht. Deswegen werden die Temperatur der temperierten Flüssigkeit in der Granulierkammer und/oder die Temperatur der temperierten Lochplatte in einem solchen Fall erhöht.

Die Temperatur der Flüssigkeit in der Granulierkammer liegt erfindungsgemäß zwischen 5 °C und 90 °C, um eine kontrollierte Expansion der Granulatkörner, bei der eine geschlossene Schaumhaut ausgebildet wird, zu erlauben. Bevorzugt liegt die Temperatur der Flüssigkeit zwischen 10 °C und 60 °C und besonders bevorzugt zwischen 25 °C und 45 °C. Die Temperatur der temperierten Lochplatte liegt erfindungsgemäß zwischen 150°C und 280°C, bevorzugt wird eine Temperatur der Lochplatte zwischen 220°C und 260°C.

Eine zu hohe Lochplattentemperatur führt zu einer dünnen Haut auf der Oberfläche der Partikel und einem späteren Kollabieren der Oberfläche. Zu niedrige Lochplattentemperaturen verringern den Expansionsgrad und führen zu dicken, ungeschäumten Partikeloberflächen.

Für das erfindungsgemäße Verfahren zur Herstellung expandierter Granulate geeignete thermoplastische Elastomere sind insbesondere thermoplastische Polyesterelastomere, namentlich Polyetherester oder Polyesterester, thermoplastische Copolyamide, namentlich Polyethercopolyamide, oder Styrol-Blockcopolymere, namentlich Styrol-Butadien-Blockcopolymere.

Es hat sich gezeigt, dass bei Einsatz thermoplastischer Polyesterelatomere, zum Beispiel Polyetherester und Polyesterester, beziehungsweise bei Einsatz von Styrol-Blockcopolymeren, insbesondere Styrol-Butadien-Blockcopolymeren die niedrigsten Dichten erhalten werden, wenn die Treibmittelmenge größer als 0,5 Gew.-% und kleiner als 1,5 Gew.-% ist und der Druck der temperierten Flüssigkeit in der Granulierkammer im Bereich von 0,1 bis 2 bar oberhalb des Umgebungsdrucks liegt. Bei thermoplastischen Copolyamiden, beispielsweise Polyethercopolyamiden, ist die Treibmittelmenge vorzugsweise größer als 1,5 Gew.-% und kleiner als 2,5 Gew.-% und der Druck in der Granulierkammer liegt dabei vorzugsweise 5 bis 20 bar oberhalb des Umgebungsdrucks.

Die thermoplastischen Polyetherester und Polyesterester können nach allen gängigen, literaturbekannten Verfahren durch Umesterung beziehungsweise Veresterung von aromatischen und aliphatischen Dicarbonsäuren mit 4 bis 20 C-Atomen beziehungsweise deren Estern mit geeigneten aliphatischen und aromatischen Diolen und Polyolen hergestellt werden. Entsprechende Herstellverfahren sind zum Beispiel beschrieben in "Polymer Chemistry", Interscience Publ., New York, 1961, S.111-127; Kunststoffhandbuch, Band VIII, C. Hanser Verlag, München 1973 und Journal of Polymer Science, Part A1, 4, Seiten 1851-1859 (1966).

Geeignete aromatische Dicarbonsäuren sind zum Beispiel Phthalsäure, Isophthalsäure und Terephthalsäure beziehungsweise deren Ester. Geeignete aliphatische Dicarbonsäuren sind zum Beispiel Cyclohexan-1,4-Dicarbonsäure, Adipinsäure, Sebacinsäure, Azelainsäure und Decandicarbonsäure als gesättigte Dicarbonsäuren sowie Maleinsäure, Fumarsäure, Aconitsäure, Itaconsäure, Tetrahydrophthalsäure und Tetrahydroterephthalsäure als ungesättigte Dicarbonsäuren.

Als Diolkomponente eignen sich beispielsweise Diole der allgemeinen Formel HO-(CH₂)ₙ-OH, wobei n eine ganze Zahl von 2 bis 20 ist. Geeignete Diole sind zum Beispiel Ethylenglykol, Propandiol-(1,3), Butandiol-(1,4) oder Hexandiol-(1,6).

Polyetherole, durch deren Umesterung der thermoplastische Polyetherester hergestellt werden kann, sind vorzugsweise solche der allgemeinen Formel HO-(CH₂)ₙ-O-(CH₂)ₘ-OH, wobei n und m gleich oder verschieden sein können und n und m unabhängig voneinander jeweils eine ganze Zahl zwischen 2 und 20 bedeuten.

Ungesättigte Diole und Polyetherole, die zur Herstellung des Polyetheresters eingesetzt werden können, sind zum Beispiel Butendiol-(1,4) sowie aromatische Einheiten enthaltende Diole und Polyetherole.

Neben den genannten Carbonsäuren beziehungsweise deren Estern sowie den genannten Alkoholen können alle weiteren gängigen Vertreter dieser Verbindungsklassen zur Bereitstellung der im erfindungsgemäßen Verfahren eingesetzten Polyetherester und Polyesterester verwendet werden. Die Hartphasen der Blockcopolymere werden üblicherweise aus aromatischen Dicarbonsäuren und kurzkettigen Diolen gebildet, die Weichphasen aus vorgebildeten aliphatischen, difunktionellen Polyestern mit einem Molekulargewicht Mw zwischen 500 und 3000 g/mol. Eine Kopplung der Hart- und Weichphasen kann zusätzlich durch Reaktivverbinder wie Diisocyanaten erfolgen, die zum Beispiel mit endständigen Alkoholgruppen reagieren.

Für das erfindungsgemäße Verfahren geeignete thermoplastische Polyetheramide können nach allen gängigen, literaturbekannten Verfahren durch Reaktion von Aminen und Carbonsäuren beziehungsweise deren Estern erhalten werden. Amine und/oder Carbonsäuren enthalten hierbei zudem Ethereinheiten des Typs R-O-R, wobei R ein aliphatischer oder aromatischer organischer Rest ist. Im Allgemeinen werden Monomere ausgewählt aus den folgenden Verbindungsklassen eingesetzt:
- HOOC-R'-NH₂, wobei R' aromatisch oder aliphatisch sein kann und vorzugsweise Ethereinheiten des Typs R-O-R enthält. R steht dabei für einen aliphatischen oder aromatischen organischen Rest,
- aromatische Dicarbonsäuren, beispielsweise Phthalsäure, Isophthalsäure und Terephthalsäure beziehungsweise deren Ester sowie aromatische Dicarbonsäuren enthaltend Ethereinheiten des Typs R-O-R, wobei R ein aliphatischer oder aromatischer organischer Rest ist,
- aliphatische Dicarbonsäuren, beispielsweise Cyclohexan-1,4-Dicarbonsäure, Adipinsäure, Sebacinsäure, Azelainsäure und Decandicarbonsäure als gesättigte Dicarbonsäuren sowie Maleinsäure, Fumarsäure, Aconitsäure, Itaconsäure, Tetrahydrophthalsäure und Tetrahydroterephthalsäure als ungesättigte Dicarbonsäuren, sowie aliphatische Dicarbonsäuren enthaltend Ethereinheiten des Typs R-O-R, wobei R ein aliphatischer und/oder aromatischer organischer Rest ist,
- Diamine der allgemeinen Formel H₂N-R"-NH₂, wobei R" aromatisch und aliphatisch sein kann und vorzugsweise Ethereinheiten des Typs R-O-R enthält und R ein aliphatischer und/oder aromatischer organischer Rest ist,
- Lactame, beispielsweise ε-caprolactam, Pyrrolidon oder Laurolactam sowie
- Aminosäuren.
Neben den genannten Carbonsäuren beziehungsweise deren Estern sowie den genannten Aminen, Lactamen und Aminosäuren können alle weiteren gängigen Vertreter dieser Verbindungsklassen zur Bereitstellung des im erfindungsgemäßen Verfahren eingesetzten Polyetheramins verwendet werden. Zudem sind Mischprodukte aus Polytetrahydrofuran und Amidbausteinen bekannt, die ebenfalls eingesetzt werden können. Erfindungsgemäß als thermoplastische Elastomere eingesetzt werden können außerdem Styrol-Butadien-Blockcopolymere. Die erfindungsgemäß eingesetzten thermoplastischen Elastomere weisen vorzugsweise eine Shore-Härte im Bereich von A40 bis D80 auf. Bevorzugt sind Shore-Härten im Bereich von A44 bis D60, insbesondere im Bereich von A65 bis A99. Ganz besonders bevorzugt liegt die Shore-Härte im Bereich von A65 bis A96. Die Shore-Härten werden bestimmt nach der DIN 53505. Der Schmelzpunkt der erfindungsgemäß eingesetzten thermoplastischen Elastomere liegt vorzugsweise unterhalb von 300°C, bevorzugt bei maximal 250°C und insbesondere bei maximal 220°C. Die Bruchdehnung der erfindungsgemäßen thermoplastischen Elastomere ist größer als 100% gemessen nach DIN EN ISO 527-2, vorzugsweise größer als 200%, mehr bevorzugt größer als 300% und insbesondere größer als 400%. Weiterhin ist die Bruchdehnung vorzugsweise maximal 1000%, bevorzugt maximal 800%.

Die erfindungsgemäß eingesetzten thermoplastischen Elastomere können teilkristallin oder amorph sein.

Die mit dem erfindungsgemäßen Verfahren hergestellten, expandierten Granulate können in wirksamen Mengen weitere Zusatzstoffe wie Farbstoffe, Pigmente, Füllstoffe, Flammschutzmittel, Synergisten für Flammschutzmittel, Antistatika, Stabilisatoren, oberflächenaktive Substanzen, Weichmacher und Infrarot-Trübungsmittel enthalten.

Geeignete Infrarot-Trübungsmittel zur Reduktion des Strahlungsbeitrags zur Wärmeleitfähigkeit sind zum Beispiel Metalloxide, Nichtmetalloxide, Metallpulver, beispielsweise Aluminiumpulver, Kohlenstoff, beispielsweise Ruß, Graphit oder Diamant oder organische Farbstoffe und Farbstoffpigmente. Der Einsatz von Infrarot-Trübungsmittel ist insbesondere für Anwendungen bei hohen Temperaturen vorteilhaft. Besonders bevorzugt als Infrarot-Trübungsmittel sind Ruß, Titandioxid, Eisenoxide oder Zirkondioxid. Die vorstehend genannten Materialien können sowohl jeweils einzeln als auch in Kombination, das heißt in Form einer Mischung aus mehreren Materialien, Verwendung finden. Wenn Füllstoffe eingesetzt werden, so können diese anorganisch und/oder organisch sein.

Wenn Füllstoffe enthalten sind, so sind diese zum Beispiel organische und anorganische Pulver oder Faserstoffe sowie Mischungen daraus. Als organische Füllstoffe können zum Beispiel Holzmehl, Stärke, Flachs-, Hanf-, Ramie-, Jute-, Sisal-, Baumwoll-, Zellulose- oder Aramidfasern eingesetzt werden. Als anorganische Füllstoffe eignen sich beispielsweise Silikate, Schwerspat, Glaskugeln, Zeolithe, Metalle oder Metalloxide. Besonders bevorzugt werden pulverförmige anorganische Stoffe wie Kreide, Kaolin, Aluminiumhydroxid, Magnesiumhydroxid, Aluminiumnitrit, Aluminiumsilikat, Bariumsulfat, Calciumcarbonat, Calciumsulfat, Kieselsäure, Quarzmehl, Aerosil, Tonerde, Glimmer oder Wollastonit oder kugel- oder faserförmige, anorganische Stoffe, beispielsweise Eisenpulver, Glaskugeln, Glasfasern oder Kohlenstofffasern, eingesetzt. Die mittleren Teilchendurchmesser beziehungsweise bei faserförmigen Füllstoffen die Länge der Fasern sollte im Bereich der Zellgröße oder kleiner sein. Bevorzugt wird ein mittlerer Teilchendurchmesser beziehungsweise eine mittlere Länge der Fasern im Bereich von 0,1 bis 100 µm, insbesondere im Bereich von 1 bis 50 µm. Bevorzugt sind expandierbare, treibmittelhaltige thermoplastische Elastomere, die zwischen 5 und 80 Gew.-% organische und/oder anorganische Füllstoffe enthalten, bezogen auf das Gesamtgewicht des treibmittelhaltigen Systems.

Oberflächenaktive Substanzen, die in der thermoplastischen Formmasse enthalten sein können, sind zum Beispiel Verbindungen, die zur Unterstützung der Homogenisierung der Ausgangsstoffe dienen und gegebenenfalls auch geeignet sind, die Zellstruktur zu regulieren. Geeignete oberflächenaktive Substanzen sind zum Beispiel Emulgatoren, beispielsweise Natriumsalze von Rizinusölsulfaten oder von Fettsäuren sowie Salze von Fettsäuren mit Aminen, beispielsweise ölsaures Diethylamin, stearinsaures Diethanolamin, ricinolsaures Diethanolamin, Salze von Sulfonsäuren, beispielsweise Alkali- oder Ammoniumsalze von Dodecylbenzol- oder Dinaphthylmethandisulfonsäure und Rizinolsäure; Schaumstabilisatoren wie Siloxanoxalkylen-Mischpolymerisate und andere Organosiloxane, oxethylierte Alkylphenole, oxethylierte Fettalkohole, Paraffinöle, Rizinusöl- bzw. Rizinolsäureester, Türkisschrotöl und Erdnussöl und Zellregler, beispielsweise Paraffine, Fettalkohole und Dimethylpolysiloxan. Zur Verbesserung der Emulgierwirkung, der Zellstruktur und/oder deren Stabilisierung eignen sich ferner oligomere Polyacrylate mit Polyoxalkylen- und Fluoralkanresten als Seitengruppen. Die oberflächenaktiven Substanzen werden üblicherweise in Mengen von 0,01 bis 5 Gew.-%, bezogen auf das Gesamtgewicht des treibmittelhaltigen Systems eingesetzt.

Geeignete Flammschutzmittel sind beispielsweise Tricresylphosphat, Tris-(2-chlorethyl)phosphat, Tris-(2-chlorpropyl)phosphat, Tris-(1,3-dichlorpropyl)phosphat, Tris-(2,3-dibrompropyl)phosphat und Tetrakis-(2-chlorethyl)ethylendiphosphat. Außer den bereits genannten halogensubstituierten Phosphaten können auch anorganische Flammschutzmittel mit rotem Phosphor, Aluminiumoxidhydrat, Antimontrioxid, Arsentrioxid, Ammoniumpolyphosphat und Calciumsulfat oder Cyanursäurederivate, beispielsweise Melamin oder Mischungen aus mindestens zwei Flammschutzmitteln, zum Beispiel Ammoniumphosphat und Melamin sowie gegebenenfalls Stärke und/oder Blähgraphit zum Flammfestmachen der hergestellten geschäumten thermoplastischen Elastomere verwendet werden. Im Allgemeinen hat es sich als zweckmäßig erwiesen, 0 bis 50 Gew.-%, vorzugsweise 5 bis 25 Gew.-% der Flammschutzmittel oder Flammschutzmittelmischungen bezogen auf das Gesamtgewicht des treibmittelhaltigen Systems, einzusetzen.

Vor dem Einpressen der Polymerschmelze in die Granulierkammer, wird diese mit dem Treibmittel CO₂ oder einer Mischung aus CO₂ und N₂ gemischt. Zusätzlich kann der Polymerschmelze ein Co-Treibmittel zugegeben werden. Als Co-Treibmittel können Alkane wie Ethan, Propan, Butan, Pentan, Alkohole wie Ethanol, Isopropanol, halogenierte Kohlenwasserstoffe oder FCKW's oder eine Mischung daraus dienen. Der alleinige Einsatz von CO₂ oder einer Mischung aus CO₂ und N₂ als Treibmittel ist besonders vorteilhaft, da es sich um Inertgase handelt, die unbrennbar sind, so dass bei der Produktion keine explosionsgefährdenden Atmosphären entstehen können. Dadurch werden kostenintensive Sicherheitsvorkehrungen unnötig und das Gefahrenpotential bei der Herstellung stark reduziert. Ebenfalls vorteilhaft ist, dass keine Auslagerzeit der Produkte aufgrund des Ausdampfens von flüchtigen brennbaren Stoffen erforderlich ist.

Weitere Vorteile ergeben sich, wenn der treibmittelhaltigen Polymerschmelze zusätzlich ein oder mehrere Nukleierungsmittel zugegeben werden. Als Nukleierungsmittel eignen sich insbesondere Talkum, Calciumfluorid, Natriumphenylphosphinat, Aluminiumoxid, Ruß, Graphit, Pigmente und feinteiliges Polytetrafluorethylen jeweils einzeln oder auch in beliebigen Mischungen. Besonders bevorzugt als Nukleierungsmittel ist Talkum. Der Anteil an Nukleierungsmittel bezogen auf die Gesamtmasse der thermoplastischen Formmasse bzw. der Polymerschmelze liegt vorzugsweise bei 0 bis 4 Gew.-%, insbesondere bei 0,1 bis 2 Gew.-%.

Im Folgenden wird die Erfindung anhand der Zeichnungen näher beschrieben. Die einzige Figur zeigt eine schematische Darstellung einer Vorrichtung zur Granulierung von Polymerschmelzen.

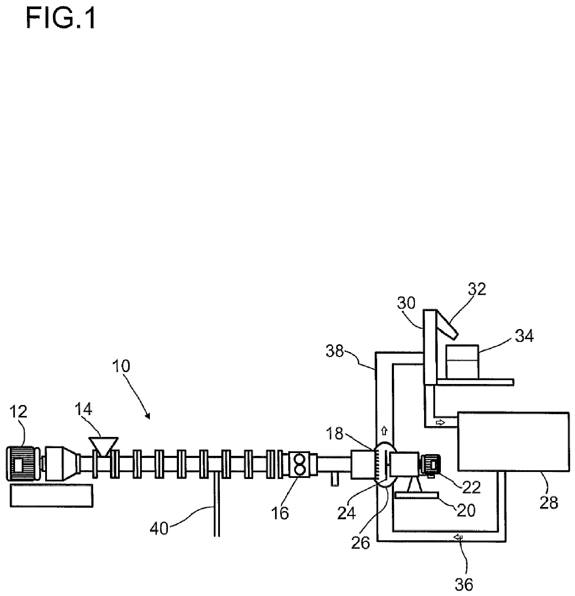

Figur 1 zeigt eine schematische Darstellung einer Vorrichtung zur Herstellung von expandiertem Granulat aus einer treibmittelhaltigen Polymerschmelze. Das Ausgangspolymer wird über einen Aufgabetrichter 14 in einen Extruder 10 eingegeben. Der Extruder 10 ist beispielsweise als Doppelschneckenextruder ausgeführt und wird über einen Motor 12 angetrieben. Über den Aufgabetrichter 14 können des Weiteren Hilfsstoffe wie beispielsweise Farbstoffe oder Nukleierungsmittel zugegeben werden. Das eingegebene Rohmaterial wird im Extruder aufgeschmolzen und plastifiziert. Dabei wird das Material in Richtung einer Lochplatte 18 transportiert.

In der in Figur 1 dargestellten Ausführungsform ist vor der Lochplatte 18 eine Schmelzepumpe 16 angeordnet, mit der die Schmelze mit einem Druck beaufschlagt wird. Der Druck wird abhängig von der Art und Menge des verwendeten Treibmittels gewählt. Das Treibmittel wird über eine Zugabestelle 40, die sich zwischen dem Aufgabetrichter 14 und der Schmelzepumpe 16 am Extruder 10 befindet in die Polymerschmelze eingegeben. In der dargestellten Ausführungsform ist die Zugabestelle 40 für das Treibmittel so angeordnet, dass das Treibmittel erst nach dem Aufschmelzen des gesamten Polymers zugegeben wird. Auf der restlichen Extruderstrecke wird das eingegebene Treibmittel in die Schmelze eingearbeitet. Ein geeignetes Treibmittel ist beispielsweise eine Mischung aus Kohlenstoffdioxid und Stickstoff.

Mit Hilfe der Schmelzepumpe 16 wird die Schmelze durch die Lochplatte 18 in eine Granulierkammer 26 gedrückt. Die Granulierkammer wird von einer Flüssigkeit durchströmt, deren Druck oberhalb des Umgebungsdrucks liegt. Die Strömung ist mit den Pfeilen 36 angedeutet. In der Granulierkammer 26 ist ein rotierendes Messer 24 in einer Granulierungseinrichtung 20 angeordnet. Das rotierende Messer 24 wird dabei von einem Motor 22 angetrieben. Die Polymerschmelze tritt aus der Lochplatte 18 in Form von mehreren expandierenden Polymersträngen heraus, die durch das rotierende Messer 24 abgeschnitten werden. Dabei entstehen einzelne expandierende Granulatkörner. Der Einpressdruck sowie die Geschwindigkeit der Schneidevorrichtung sind dabei so gewählt, dass die Form der Granulatkörner im Wesentlichen sphärisch ist.

In der temperierten Flüssigkeit werden die Granulatkörner durch das enthaltende Treibmittel expandiert, wobei die Temperatur der temperierten Flüssigkeit, der temperierten Lochplatte sowie der Druck der temperierten Flüssigkeit so gewählt sind, dass die expandierten Granulatkörner eine geschlossene Schaumhaut aufweisen. Durch die Strömung der temperierten Flüssigkeit werden die entstandenen expandierenden beziehungsweise expandierten Granulatkörner aus der Granulierkammer 26 ausgetragen und über die Kreislaufleitung 38 einem Trockner 30 zugeführt. Im Trockner 30 werden die expandierten Granulatkörner von der temperierten Flüssigkeit getrennt und getrocknet und über den Produktaustrag 32 in einen Auffangbehälter 34 gegeben. Die vom Granulat befreite temperierte Flüssigkeit strömt über die Kreislaufleitung 38 weiter in eine Kreislaufpumpe 28, wo die temperierte Flüssigkeit gefiltert, temperiert und mit Druck beaufschlagt wird. Von der Kreislaufpumpe 28 strömt die temperierte Flüssigkeit zurück in die Granulierkammer 26.

### Beispiele

In einem Doppelschneckenextruder mit einem Schneckendurchmesser von 18 mm und einem Verhältnis von Länge zu Durchmesser von 40 werden 99,5 Gewichtsanteile eines thermoplastischen Elastomers (TPE) und 0,5 Gewichtsanteile Talkum dosiert. Das thermoplastische Elastomer wurde in der Aufschmelzzone des Doppelschneckenextruders aufgeschmolzen und mit dem Talkum gemischt. Nach dem Aufschmelzen des thermoplastischen Elastomers und dem Einmischen des Talkums wurde CO₂ beziehungsweise in Beispiel 6 eine Mischung aus CO₂ und N₂ als Treibmittel zugegeben. Die dosierten Mengen des Treibmittels sind jeweils in den Beispielen in Tabellen aufgelistet. Beim Durchlaufen der restlichen Extruderstrecke wurden das Treibmittel und die Polymerschmelze miteinander vermischt, so dass sich eine homogene Mischung bildet. Der Gesamtdurchsatz des Extruders, welcher das TPE, das Talkum und das Treibmittel beinhaltet, betrug 3,5 kg/h.

In den Beispielen 1 bis 5 wurden folgende Prozessparameter eingestellt: Die Temperatur im Extruder in der Aufschmelzzone und während der Einmischung des Talkums in das TPE betrug in Abhängigkeit vom eingesetzten TPE zwischen 230°C und 220°C. Die Temperatur am Extrudergehäuse der Injektionsstelle wurde auf 205°C bis 220 °C und das nachfolgende Gehäuse auf 200 °C bis 220 °C herabgesetzt. Alle weiteren Gehäuseteile bis zum Extruderende sowie die Schmelzepumpe wurden auf 200 °C bis 220 °C gehalten. Über die Schmelzepumpe wurde ein Druck am Ende des Extruders von 90 bar eingestellt. Die Temperatur des Anfahrventils wurde auf 210 °C beziehungsweise 220 °C eingestellt und die Lochplatte über eine elektrische Heizung auf eine Solltemperatur von 250 °C geheizt.

Im Beispiel 6 wurden folgende Prozessparameter eingestellt: Die Temperatur im Extruder bis zum Anfahrventil wurde konstant auf 180°C eingestellt und die Lochplatte über eine elektrische Heizung auf eine Solltemperatur von 250°C geheizt. Über die Schmelzepumpe wurde ein Druck am Ende des Extruders von 90 bar eingestellt.

Für alle Beispiele wurde das aus Gemisch aus TPE, Talkum und Treibmittel durch die Lochplatte mit einem Loch mit einem Durchmesser von 1 mm gedrückt und in der dahinter liegenden von Wasser durchströmten Granulierkammer durch 10 rotierende an einem Messerkranz befestigte Messer abgeschlagen. Der Druck in der Granulierkammer betrug für die Beispiele 1 bis 5 1 bar und wurde für Beispiel 6 auf 10 bis 15 bar eingestellt. Das temperierte Medium wurde auf 30 °C konstant gehalten. Während des Aufenthalts des Gemisches in der Granulierkammer expandiert dieses. Dabei wurden Partikel mit einer durchschnittlichen Größe von ca. 2 mm und einem Gewicht von ca. 2 mg hergestellt. Zur Bestimmung der Schüttdichte wurde ein 100 ml Gefäß mit den expandierten Partikeln gefüllt und das Gewicht mittels einer Waage bestimmt. Dabei kann von einer Genauigkeit von ± 5 g/l ausgegangen werden. In allen Beispielen weisen die so hergestellten Granulatkörner eine geschlossene Haut auf.

Die nachfolgenden Beispiele geben die Ergebnisse wieder.

### Beispiel 1

Als TPE wurde ein Polyetherester auf Basis von Poly-Tetrahydrofuran (Poly-THF) und Polybutylenterephthalat (PBT) mit einer Bruchdehnung von mehr 500%, einer Shore-Härte von 90A und einem Schmelzbereich von 175 bis 190°C verwendet. Dieses TPE wurde nach dem vorstehend beschriebenen Verfahren verarbeitet und die Schüttdichte wie oben beschrieben ermittelt. Die Schüttdichten bei den jeweils zugegebenen Treibmittelanteilen sind in Tabelle 1 aufgelistet.

**Tabelle 1**

| Beispiel | CO₂ (Gew.-%) | Schüttdichte (g/l) |
|---|---|---|
| 1.1 | 0,5 | 342 |
| 1.2 | 0,75 | 299 |
| 1.3 | 1,0 | 229 |
| 1.4 | 1,25 | 164 |
| 1.5 | 1,5 | 254 |
| 1.6 | 1,75 | 378 |
| 1.7 | 2 | 355 |
| 1.8 | 2,5 | 367 |

### Beispiel 2

Als TPE wurde ein Polyesterester auf Basis von 1,4-Benzdicarbonsäure, Dimethylester, 1,4-Butandiol und α-Hydro-ω-hydroxypoly(oxy-1,4-butandiyl) mit einer Bruchdehnung von mehr als 700%, einer Shore-Härte von 96A und einem Schmelzbereich von 200 bis 220°C, zum Beispiel erhältlich als Pelprene® P-70B der Firma Toyobo Co, Ltd., verwendet. Dieses TPE wurde nach dem oben beschriebenen Verfahren verarbeitet und die Schüttdichte wie oben beschrieben ermittelt. Die Schüttdichten bei den jeweils zugegebenen Treibmittelanteilen sind in Tabelle 2 aufgelistet.

**Tabelle 2**

| Beispiel | CO₂ (Gew.-%) | Schüttdichte (g/l) |
|---|---|---|
| 2.1 | 0,5 | 340 |
| 2.2 | 0,75 | 267 |
| 2.3 | 1,0 | 202 |
| 2.4 | 1,25 | 153 |
| 2.5 | 1,5 | 257 |
| 2.6 | 1,75 | 393 |
| 2.7 | 2 | 372 |
| 2.8 | 2,5 | 379 |

### Beispiel 3

Als TPE wurde ein Styrol-Butadien-Blockcopolymer (SBC) mit den Eigenschaften eines thermoplastischen Elastomers (S-TPE, Bruchdehnung größer als 300%, Shore-Härte 84A, eine Schmelz-Volumenfließrate (Melt volume rate) MVR (200 °C/5 kg) = 14 cm³/10 min), erhältlich zum Beispiel als Styroflex® 2G66 der Styrolution, verwendet. Dieses TPE wurde nach dem oben beschriebenen Verfahren verarbeitet und die Schüttdichte wie oben beschrieben ermittelt. Die Schüttdichten bei den jeweils zugegebenen Treibmittelanteilen sind in Tabelle 3 aufgelistet.

**Tabelle 3**

| Beispiel | CO₂ (Gew.-%) | Schüttdichte (g/l) |
|---|---|---|
| 3.1 | 0,5 | 256 |
| 3.2 | 0,75 | 181 |
| 3.3 | 1,0 | 244 |
| 3.4 | 1,25 | 349 |
| 3.5 | 1,5 | 389 |
| 3.6 | 1,75 | 392 |
| 3.7 | 2 | 401 |
| 3.8 | 2,5 | 387 |

### Beispiel 4

Als TPE wurde ein Polyetherester mit einem Polyether-Weichsegment mit einer Bruchdehnung von mehr als 450%, einer Shore-Härte von 38D und einem MVR (190 °C/2,16 kg) von 28 cm³/10 min, erhältlich zum Beispiel als Arnitel® PL380 der DSM, verwendet. Dieses TPE wurde nach dem oben beschriebenen Verfahren verarbeitet und die Schüttdichte wie oben beschrieben ermittelt. Die Schüttdichten bei den jeweils zugegebenen Treibmittelanteilen sind in Tabelle 4 aufgelistet.

**Tabelle 4**

| Beispiel | CO₂ (Gew.-%) | Schüttdichte (g/l) |
|---|---|---|
| 4.1 | 0,5 | 289 |
| 4.2 | 0,75 | 192 |
| 4.3 | 1,0 | 183 |
| 4.4 | 1,25 | 169 |
| 4.5 | 1,5 | 257 |
| 4.6 | 1,75 | 278 |
| 4.7 | 2 | 275 |
| 4.8 | 2,5 | 281 |

### Beispiel 5

Als TPE wurde ein Polyetherester auf Basis von harten (kristallinen) Polybutylenterephthalat-Segmenten und weichen (amorphen) Bausteinen von langkettigen Polyetherglykolen mit einer Bruchdehnung von mehr als 700%, einer Shore-Härte 30D und einer Schmelz-Massefließrate (mass flow rate) MFR (190 °C/2,16 kg) von 5 g / 10 min, zum Beispiel erhältlich als Hytrel® 3078 der DuPont, verwendet. Dieses TPE wurde nach dem oben beschriebenen Verfahren verarbeitet und die Schüttdichte wie oben beschrieben ermittelt. Die Schüttdichten bei den jeweils zugegebenen Treibmittelanteilen sind in Tabelle 5 aufgelistet.

**Tabelle 5**

| Beispiel | CO₂ (Gew.-%) | Schüttdichte (g/l) |
|---|---|---|
| 5.1 | 0,5 | 273 |
| 5.2 | 0,75 | 204 |
| 5.3 | 1,0 | 175 |
| 5.4 | 1,25 | 214 |
| 5.5 | 1,5 | 265 |
| 5.6 | 1,75 | 299 |
| 5.7 | 2 | 287 |
| 5.8 | 2,5 | 284 |

### Beispiel 6

Als TPE wurde ein Polyethercopolyamid auf Basis von elastischen Polyethereinheiten und kristallinen Polyamideinheiten mit einer Bruchdehnung von mehr als 750%, einer Shore-Härte 27D und einem Schmelzpunkt von 134°C nach ISO 11357, erhältlich als Pebax® 2533 SD 02 der Arkema, verwendet. Dieses TPE wurde nach dem oben beschriebenen Verfahren verarbeitet und die Schüttdichte wie oben beschrieben ermittelt. Die Schüttdichten bei den jeweils zugegebenen Treibmittelanteilen und den unterschiedlichen Drücken der temperierten Flüssigkeit in der Granulierkammer sind in Tabelle 6 aufgeführt.

**Tabelle 6**

| Beispiel | CO₂ (Gew.-%) | N₂ (Gew.-%) | Druck in der Granulierkammer (bar) | Schüttdichte (g/l) |
|---|---|---|---|---|
| 6.1 | 1,75 | 0,3 | 10 | 213 |
| 6.2 | 1,75 | 0,3 | 15 | 167 |

### Bezugszeichenliste

- 10: Extruder
- 12: Motor
- 14: Aufgabetrichter
- 16: Schmelzepumpe
- 18: Lochplatte
- 20: Granulierungseinrichtung
- 22: Motor
- 24: Messer
- 26: Granulierkammer
- 28: Kreislaufpumpe
- 30: Trockner
- 32: Produktaustrag
- 34: Auffangbehälter
- 36: Strömungsrichtung
- 38: Kreislaufleitung
- 40: Zugabestelle für Treibmittel

## Patentansprüche

1. Verfahren zur Herstellung von expandiertem Granulat aus einem thermoplastischen Elastomer mit einer Bruchdehnung von mehr als 100% gemessen nach DIN EN ISO 527-2, umfassend die Schritte:
(a) Pressen einer treibmittelhaltigen Polymerschmelze durch eine auf eine Temperatur zwischen 150°C und 280 °C temperierte Lochplatte (18) in eine Granulierkammer (26),
(b) Zerkleinern der durch die Lochplatte (18) gepressten Polymerschmelze mit einer Schneidevorrichtung (20) in einzelne expandierende Granulatkörner,
(c) Austragen der Granulatkörner aus der Granulierkammer (26) mit einem Flüssigkeitsstrom (36),
wobei das Treibmittel CO₂ oder N₂ oder eine Kombination aus CO₂ und N₂ enthält und die Menge an Treibmittel in der treibmittelhaltigen Polymerschmelze im Bereich von 0,5 bis 2,5 Gew.-% liegt und wobei die Granulierkammer (26) von einer auf eine Temperatur zwischen 5 °C und 90 °C temperierten Flüssigkeit durchströmt wird, deren Druck 0,1 bar bis 20 bar oberhalb des Umgebungsdrucks liegt, wobei Druck und Temperatur der Flüssigkeit in der Granulierkammer (26) sowie die Temperatur der Lochplatte (18) so gewählt werden, dass die Granulatkörner in der unter Druck stehenden Flüssigkeit durch das enthaltene Treibmittel so expandiert werden, dass expandierte Granulatkörner mit einer geschlossenen Haut entstehen, und wobei die Polymerschmelze ein thermoplastisches Elastomer auf Basis von Polyetheramiden, Polyetherestern, Polyesterestern oder Styrol-Butadien-Blockcopolymeren enthält.

2. Verfahren nach Anspruch 1, **dadurch gekennzeichnet, dass** das thermoplastische Elastomer eine Bruchdehnung von mehr als 200% gemessen nach DIN EN ISO 527-2 aufweist.

3. Verfahren nach einem der Ansprüche 1 oder 2, **dadurch gekennzeichnet, dass** die Temperatur der Flüssigkeit in der Granulierkammer (26) bei einer unkontrollierten Expansion des Granulats, bei der keine geschlossene Haut ausgebildet wird, gesenkt und bei ausbleibender oder zu geringer Expansion des Granulats erhöht wird.

4. Verfahren nach einem der Ansprüche 1 bis 3, **dadurch gekennzeichnet, dass** die Temperatur der Lochplatte (18) bei einer unkontrollierten Expansion des Granulats, bei der keine geschlossene Haut ausgebildet wird, gesenkt und bei ausbleibender oder zu geringer Expansion des Granulats erhöht wird.

5. Verfahren nach einem der Ansprüche 1 bis 4, **dadurch gekennzeichnet, dass** die treibmittelhaltige Polymerschmelze ein Nukleierungsmittel enthält.

6. Verfahren nach Anspruch 5, **dadurch gekennzeichnet, dass** das Nukleierungsmittel eine Größe zwischen 0,01 µm und 100 µm aufweist und ausgewählt ist aus Talkum, Calciumfluorid, Natriumphenylphosphinat, Aluminiumoxid, Ruß, Graphit, Pigmente, feinteiligem Polytetrafluorethylen oder einer Mischung daraus.

7. Verfahren nach einem der Ansprüche 1 bis 6, **dadurch gekennzeichnet, dass** das Treibmittel ein Co-Treibmittel enthält, wobei das Co-Treibmittel ausgewählt ist aus einem Alkan, einem Alkohol, einem halogenierten Kohlenwasserstoff oder einer Mischung daraus.

8. Verfahren nach einem der Ansprüche 1 bis 7, **dadurch gekennzeichnet, dass** Druck und Temperatur in der Granulierkammer so gewählt werden, dass die Schüttdichte des expandierten Granulats maximal 250 g/l beträgt.

## Claims

1. A process for production of expanded pellets from a thermoplastic elastomer having an elongation at break of more than 100% measured to DIN EN 150 527-2, said process comprising the steps of:
(a) pressing a polymer melt comprising a blowing agent through a perforated disk (18) controlled to a temperature between 150°C and 280°C and into a pelletizing chamber (26),
(b) using a cutting device (20) to comminute the polymer melt pressed through the perforated disk (18) into individual expanding pellets,
(c) discharging the pellets from the pelletizing chamber (26) using a liquid stream (36),
wherein the blowing agent comprises CO₂ or N₂ or a combination of CO₂ and N₂ and the amount of blowing agent in the polymer melt comprising a blowing agent lies in the range from 0.5 to 2.5 wt% and wherein the pelletizing chamber (26) is traversed by a stream of liquid which is controlled to a temperature between 5°C and 90°C and the pressure of which is from 0.1 bar to 20 bar above ambient pressure, the pressure and temperature for the liquid in the pelletizing chamber (26) and also the temperature for the perforated disk (18) being chosen such that the pellets are expanded in the pressurized liquid by the blowing agent they contain so as to produce expanded pellets having an uninterrupted skin,
and wherein the polymer melt comprises a thermoplastic elastomer based on polyetheramides, polyetheresters, polyesteresters or styrene/butadiene block copolymers.

2. The process according to claim 1 wherein the thermoplastic elastomer has an elongation at break of more than 200% measured to DIN EN 150 527-2.

3. The process according to either of claims 1 and 2 wherein the temperature of the liquid in the pelletizing chamber (26) is lowered when the pellets undergo an uncontrolled expansion which does not produce an uninterrupted skin and is raised when there is no or insufficient expansion of the pellets.

4. The process according to any of claims 1 to 3 wherein the temperature of the perforated disk (18) is lowered when the pellets undergo an uncontrolled expansion which does not produce an uninterrupted skin and is raised when there is no or insufficient expansion of the pellets.

5. The process according to any of claims 1 to 4 wherein the polymer melt comprising a blowing agent comprises a nucleating agent.

6. The process according to claim 5 wherein the nucleating agent has a size between 0.01 µm and 100 µm and is selected from talc, calcium fluoride, sodium phenylphosphinate, aluminum oxide, carbon black, graphite, pigments, finely divided polytetrafluoroethylene or a mixture thereof.

7. The process according to any of claims 1 to 6 wherein the blowing agent comprises a co-blowing agent, wherein the co-blowing agent is selected from an alkane, an alcohol, a halogenated hydrocarbon or a mixture thereof.

8. The process according to any of claims 1 to 7 wherein pelletizing chamber inside pressure and temperature are chosen such that the bark density of the expanded pellets is not more than 250 g/l.

## Revendications

1. Procédé de fabrication d'un granulat expansé en un élastomère thermoplastique ayant un allongement à la rupture de plus de 100 %, mesuré selon DIN EN ISO 527-2, comprenant les étapes suivantes :
(a) l'extrusion d'une masse fondue polymère contenant un agent gonflant au travers d'une plaque perforée (18) conditionnée à une température comprise entre 150 °C et 280 °C dans une chambre de granulation (26),
(b) le broyage de la masse fondue polymère extrudée au travers de la plaque perforée (18) avec un dispositif de découpe (20) en grains de granulat individuels en expansion,
(c) le déchargement des grains de granulat de la chambre de granulation (26) avec un courant de liquide (36), l'agent gonflant contenant du CO₂ ou du N₂ ou une combinaison de CO₂ et de N₂, et la quantité d'agent gonflant dans la masse fondue polymère contenant l'agent gonflant se situant dans la plage allant de 0,5 à 2,5 % en poids, et la chambre de granulation (26) étant traversée par un liquide conditionné à une température comprise entre 5 °C et 90 °C, dont la pression se situe 0,1 bar à 20 bar au-dessus de la pression ambiante, la pression et la température du liquide dans la chambre de granulation (26) et la température de la plaque perforée (18) étant choisies de sorte que les grains de granulat s'expansent dans le liquide sous pression par le biais de l'agent gonflant contenu de sorte que des grains de granulat expansés ayant une peau fermée soient formés, et la masse fondue polymère contenant un élastomère thermoplastique à base de polyéther-amides, de polyétheresters, de polyester-esters ou de copolymères séquencés de styrène-butadiène.

2. Procédé selon la revendication 1, **caractérisé en ce que** l'élastomère thermoplastique présente un allongement à la rupture de plus de 200 %, mesuré selon DIN EN ISO 527-2.

3. Procédé selon l'une quelconque des revendications 1 ou 2, **caractérisé en ce que** la température du liquide dans la chambre de granulation (26) est diminuée lors d'une expansion incontrôlée du granulat, lors de laquelle une peau fermée ne se forme pas, et augmentée lors d'une expansion absente ou trop faible du granulat.

4. Procédé selon l'une quelconque des revendications 1 à 3, **caractérisé en ce que** la température de la plaque perforé (18) est diminuée lors d'une expansion incontrôlée du granulat, lors de laquelle une peau fermée ne se forme pas, et augmentée lors d'une expansion absente ou trop faible du granulat.

5. Procédé selon l'une quelconque des revendications 1 à 4, **caractérisé en ce que** la masse fondue polymère contenant l'agent gonflant contient un agent de nucléation.

6. Procédé selon la revendication 5, **caractérisé en ce que** l'agent de nucléation présente une taille comprise entre 0,01 µm et 100 µm, et est choisi parmi le talc, le fluorure de calcium, le phosphinate de phényle sodique, l'oxyde d'aluminium, le noir de carbone, le graphite, les pigments, le polytétrafluoroéthylène finement divisé ou un mélange de ceux-ci.

7. Procédé selon l'une quelconque des revendications 1 à 6, **caractérisé en ce que** l'agent gonflant contient un co-agent gonflant, le co-agent gonflant étant choisi parmi un alcane, un alcool, un hydrocarbure halogéné ou un mélange de ceux-ci.

8. Procédé selon l'une quelconque des revendications 1 à 7, **caractérisé en ce que** la pression et la température dans la chambre de granulation sont choisies de sorte que la densité apparente du granulat expansé soit d'au plus 250 g/l.
